# FASCICULE DE BREVET EUROPEEN

(11) **EP 3 147 811 B1**
(45) Date de publication et mention de la délivrance du brevet: **06.02.2019**
(21) Numéro de dépôt: 16156141.0
(22) Date de dépôt: 17.02.2016
(51) Int. Cl.: G06F 21/64, G06F 21/79, G06F 3/06, G06F 12/0802, G06F 12/0871, G06F 12/0875

(54) **STOCKAGE ET LECTURE D'UN CODE D'AUTHENTIFICATION DE MESSAGE DANS UNE MÉMOIRE EXTERNE**
SPEICHERN UND ABRUFEN EINES NACHRICHTENAUTHENTIFIZIERUNGSCODES IN EINEM EXTERNEN SPEICHER
STORAGE AND RETRIEVAL OF A MESSAGE AUTHENTICATION CODE FROM AN EXTERNAL MEMORY.

(30) Priorité: 24.09.2015 FR 1559009
(43) Date de publication de la demande: 29.03.2017
(73) Titulaire: STMicroelectronics (Rousset) SAS, 13790 Rousset (FR)
(72) Inventeur: MARTINEZ, Albert, 13320 BOUC BEL AIR (FR)
(74) Mandataire: Casalonga

(56) Documents cités:
- US-A1- 2012 079 283
- US-A1- 2014 208 109

## Description

Des modes de mise en oeuvre et de réalisation de l'invention concernent la sécurisation de codes programmes stockés dans une mémoire externe, par exemple de type FLASH NOR, destinés à être exécutés par un module de traitement informatique, comprenant par exemple mais non limitativement un microprocesseur et une mémoire cache.

Un module de traitement informatique peut comporter outre un microprocesseur, une mémoire cache lui permettant de stocker du code programme récemment utilisé afin d'y accéder plus rapidement lors d'une éventuelle réutilisation. Si le code programme n'est pas présent dans la mémoire cache, il est transféré depuis une mémoire de niveau supérieur vers la mémoire cache. Lors de ce transfert, le code programme peut être la cible d'attaquants ayant modifié ou remplacé le code programme par du code malveillant. Il est donc nécessaire, notamment pour des applications critiques, de vérifier l'intégrité du code programme transféré.

On connait des procédés permettant de vérifier l'intégrité d'un code programme qui utilisent des codes d'authentification de message, communément désignés sous l'acronyme anglo-saxon « MAC (« Message Authentication Code »).

Un code d'authentification de message est un code accompagnant des données dans le but d'assurer l'intégrité de ces dernières en permettant de vérifier qu'elles n'ont subi aucune modification après une transmission d'une mémoire externe vers un microprocesseur par exemple.

Actuellement, le code d'authentification message peut soit être stocké
- dans une zone de la mémoire externe différente de celle dans laquelle se situe le code programme, auquel cas la lecture du code d'authentification nécessite un second accès en lecture, soit
- dans le même emplacement mémoire que le code programme, à la suite de celui-ci, mais ce cas n'est pas compatible avec les transactions circulaires (« Wrap », selon la dénomination Anglo-saxonne »).

Le document US 2014/0208109 A1 divulgue un procédé de protection de la confidentialité et de l'intégrité des informations sensibles stockées dans une mémoire cache. La protection consiste à associer un code d'authentification (MAC) à chaque ligne de données du cache et à stocker ces codes d'authentification dans des lignes de caches dédiées.

De même, le document US 2012/0079283 A1 divulgue l'utilisation de codes d'authentification pour protéger l'intégrité des données. Les codes d'authentification (MAC) sont stockés dans un emplacement d'une mémoire externe.

Selon un mode de réalisation, il est proposé un procédé permettant de stocker le code d'authentification message de façon fractionnée dans le code programme.

Selon un premier aspect, il est proposé un procédé de sécurisation d'un code programme destiné à être exécuté par une unité centrale d'un module de traitement informatique couplée à une mémoire cache contenant des lignes de cache possédant chacune un champ de données destiné à stocker des mots d'instruction exécutables par l'unité centrale, comprenant un stockage du code programme dans des emplacements mémoire d'une mémoire externe au module de traitement informatique, chaque emplacement mémoire étant capable de stocker les mots d'instructions d'une ligne de cache, une détermination de codes d'authentification respectivement associés auxdites lignes de cache et pour chaque ligne de cache une fragmentation du code d'authentification associé et un stockage de ce code d'authentification fragmenté réparti dans l'emplacement mémoire correspondant.

Ainsi, lors d'une requête d'une ligne d'instruction de code programme par le module de traitement informatique, la lecture du code programme et du code d'authentification se fait simultanément. En outre, ce mode de réalisation est compatible avec les transactions circulaires.

Selon un mode de réalisation, chaque emplacement mémoire contient des mots mémoires destinés à stocker respectivement les mots de la ligne de cache correspondante, chaque mot mémoire a une capacité de stockage supérieure à celle du mot d'instruction et contient une zone non utilisée pour le stockage du mot d'instruction, et les fragments du code d'authentification associé aux mots d'instructions de la ligne de cache sont stockés dans certaines au moins desdites zones non utilisées.

Le procédé peut comprendre en outre lors d'une requête d'un mot d'instruction par l'unité centrale non présent dans une ligne de cache de la mémoire cache,
- une extraction de la mémoire externe des mots d'instructions de la ligne de cache correspondante et du code d'authentification fragmenté associé,
- une reconstitution du code d'authentification à partir desdits fragments
- un calcul du code d'authentification à partir des mots d'instructions extraits, et
- une comparaison du code d'authentification calculé avec le code d'authentification reconstitué.

Selon un autre mode de réalisation chaque emplacement mémoire contient des mots mémoires destinés à stocker respectivement les mots de la ligne de cache correspondante, chaque mot mémoire a une capacité de stockage égale à celle du mot d'instruction, et le stockage du code programme comprend une compression de certains au moins des mots d'instructions de chaque ligne de cache et un stockage des mots d'instructions compressés dans les mots mémoires correspondants, ce stockage laissant subsister une zone libre dans le mot mémoire correspondant, et les fragments du code d'authentification associé aux mots d'instructions compressés de la ligne de cache sont stockés dans lesdites zones libres.

Ainsi, ce mode de réalisation permet de s'affranchir de l'utilisation de mots mémoires de taille supérieure à celle des mots d'instruction, car la compression des mots d'instruction permet d'obtenir des zones libres dans les mots mémoire, et d'y stocker le code d'authentification.

La compression peut se faire soit par un algorithme permettant d'obtenir des mots compressés de tailles variables, soit par un algorithme permettant d'obtenir des mots compressés de taille fixe.

Le procédé peut comprendre en outre
- lors d'une requête d'un mot d'instruction par l'unité centrale non présent dans une ligne de cache de la mémoire cache,
- une extraction de la mémoire externe des mots d'instructions de la ligne de cache correspondante et du code d'authentification fragmenté associé,
- une reconstitution du code d'authentification à partir desdits fragments,
- une décompression des mots d'instructions compressés,
- un calcul du code d'authentification à partir des mots d'instruction décompressés, et
- une comparaison du code d'authentification calculé avec le code d'authentification extrait.

Selon un deuxième aspect, il est proposé un système comprenant :
- un module de traitement informatique contenant une unité centrale,
- une mémoire cache contenant des lignes de cache possédant chacune un champ de données destiné à stocker des mots d'instruction exécutables par l'unité centrale du module de traitement informatique,
- une mémoire externe au module de traitement informatique comprenant des emplacements mémoire correspondant à des champs de données de lignes de cache, chaque emplacement mémoire étant configuré pour stocker les mots d'instructions d'une ligne de cache,
- des moyen de contrôle configurés pour déterminer des codes d'authentification respectivement associés auxdites lignes de cache, fragmenter le code d'authentification associé et stocker ce code d'authentification fragmenté réparti dans l'emplacement mémoire correspondant,

Chaque mot mémoire de chaque emplacement mémoire à une capacité de stockage supérieure à celle du mot d'instruction et contient une zone non utilisée pour le stockage du mot d'instruction, et certaines au moins desdites zones non utilisées sont aptes à recevoir les fragments du code d'authentification associé aux mots d'instructions de la ligne de cache.

Les moyens de contrôle sont configurés pour, lors d'une requête d'un mot d'instruction par l'unité centrale non présent dans une ligne de cache de la mémoire cache,
- extraire de la mémoire externe les mots d'instructions de la ligne de cache correspondante et le code d'authentification fragmenté associé,
- reconstruire le code d'authentification à partir desdits fragments
- calculer le code d'authentification à partir des mots d'instructions extraits, et
- comparer le code d'authentification calculé avec le code d'authentification reconstitué

Selon un autre mode de réalisation de cet aspect, chaque emplacement mémoire contient des mots mémoires destinés à stocker respectivement les mots de la ligne de cache correspondante, chaque mot mémoire a une capacité de stockage égale à celle du mot d'instruction, et est apte à recevoir des mots d'instruction compressés ou non de manière à laisser subsister une zone libre dans le mot mémoire apte à recevoir un fragment du code d'authentification associé aux mots d'instructions compressés de la ligne de cache.

Les moyens de contrôle peuvent avantageusement être configurés pour compresser les mots d'instructions en mots compressés de tailles égales ou en mots compressés de tailles variables.

D'autres avantages et caractéristique de l'invention apparaitront à l'examen de la description détaillée de mode de mise en oeuvre et de réalisation, nullement limitatifs et des dessins annexés sur lesquels :
- la figure 1 illustre un mode de réalisation de l'invention,
- les figures 2 à 6 illustrent des modes de mise en oeuvre de l'invention.

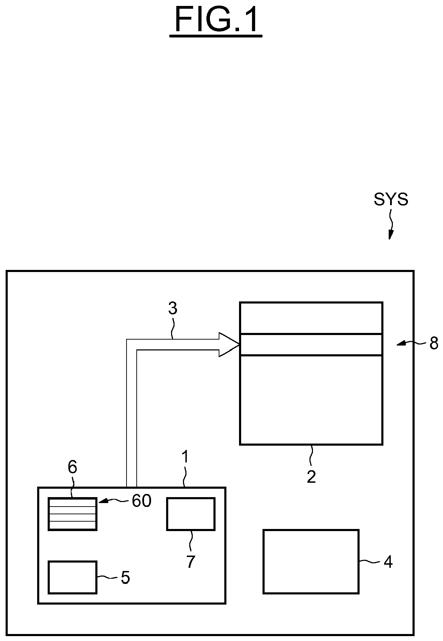

La figure 1 représente un système SYS comprenant un module de traitement informatique 1, par exemple un microprocesseur, couplé à une mémoire externe 2, par exemple du type FLASH NOR, via un bus de communication 3.

Le système SYS comprend également des moyens de contrôle 4 configurés pour effectuer des opérations de décompression et/ou de concaténation sur des données échangées entre le module de traitement 1 et la mémoire externe 2. Ces opérations seront vues plus en détail ci-après.

Le module de traitement 1 comprend dans cet exemple un microprocesseur 5, un cache 6 de niveau un comprenant des lignes de cache 60 destiné à recevoir des mots d'instruction 83 d'un code programme et un contrôleur de cache 7. Dans cet exemple, le cache comprend des lignes de cache pouvant recevoir trente-deux mots de 16 bits chacun.

La mémoire externe comprend des emplacements mémoire 8, configurés chacun pour recevoir des mots d'instruction 83 d'un code programme correspondant à une ligne de cache et un code d'authentification message associé à ladite ligne de cache.

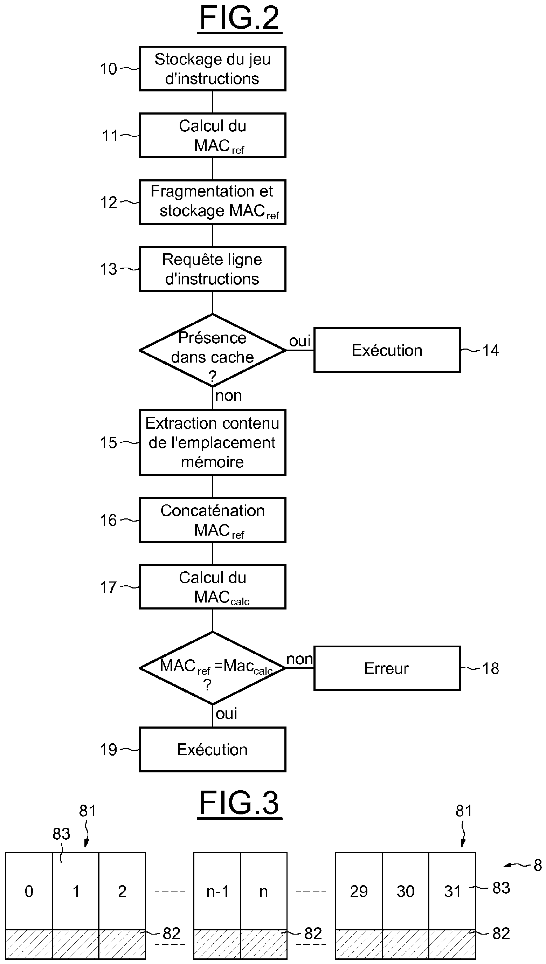

La figure 2 représente de manière schématique les différentes étapes d'un mode de mise en oeuvre de l'invention.

A l'étape 10, le code programme est stocké dans les emplacements mémoire 8.

Comme illustré sur la figure 3, dans un emplacement mémoire 8, chaque mot d'instruction 83 d'une ligne de cache est stocké dans un mot mémoire 81 de taille supérieure à celle des mots d'instructions 83, de manière à ce qu'il y subsiste une zone libre 82 après le stockage du mot d'instruction 83.

Par exemple ici, les mots mémoires 81 de la mémoire externe sont des mots de 18 bits, dont 16 bits sont destinés à stocker les mots d'instruction 83, et deux bits sont des bits supplémentaires. Chaque emplacement mémoire 8 est donc capable de stocker les 32 mots d'instructions 83 d'une ligne de cache dans les 32 mots mémoire 81 de 18 bits en laissant un espace libre de 32x2 bits réparti sur les 32 mots mémoire 81.

Dans l'exemple décrit ici, ces zones libres 82 sont situées à la fin des mots mémoires 81. En variante elles pourraient être situées au début des mots mémoire 81 ou bien à toute position connue de ces motifs 81.

A l'étape 11, on effectue le calcul d'un code d'authentification message MAC (« Message Authentication Code ») référencé MAC_{ref} à partir du code programme présent sur l'emplacement mémoire 8. Un code d'authentification message s'obtient par exemple de façon classique par un algorithme utilisant en entrée le message à transmettre et une clé de codage afin d'obtenir en sortie le code d'authentification. Cet algorithme, semblable aux fonctions de hachage bien connues de l'homme du métier, n'a pas besoin d'être réversible. Il permet d'assurer l'intégrité et l'authenticité des données transmises.

L'étape 12 comprend une fragmentation du code d'authentification MAC_{ref} associé aux 32 mots d'instructions 83 afin de le répartir ici dans lesdites zones libres 82 des 32 mots mémoire 81. Il pourrait ne pas être nécessaire d'utiliser les 32 zones libres 82 pour stocker les fragments MAC_{ref}, mais par exemple seulement certaines des zones libres.

Il convient de noter ici que le calcul des codes MAC_{ref} et leur fragmentation pourraient être effectués avant stockage du jeu d'instruction et suivies d'un stockage simultané du jeu d'instruction et des codes MAC_{ref} fragmentés dans la mémoire.

Ensuite (étape 13), si l'unité centrale 5, ici un microcontrôleur, effectue une requête d'un mot d'instruction 83, le contrôleur de cache 7 vérifie la présence dudit mot d'instruction 83 dans une ligne de cache du cache 6 du module de traitement informatique 1.

Si le mot d'instruction est présent dans une ligne de cache du cache 6, alors l'instruction est exécutée (étape 14) par le microcontrôleur 6.

Dans le cas contraire (étape 15), on parle de défaut de cache (« Cache miss » selon la dénomination anglo-saxonne). Le contrôleur de cache effectue alors une requête auprès de la mémoire externe 2 pour que lui soit transmis le contenu de l'emplacement mémoire 8 stockant la ligne de cache contenant le mot d'instruction requis.

Il convient de noter qu'une ligne de cache est le plus petit élément qui peut être transféré entre la mémoire cache 6 et la mémoire externe 2. A chaque requête d'un mot d'instruction 83, la totalité des mots 81 de l'emplacement mémoire 8 est donc transférée, et non pas seulement le mot mémoire 81 contenant le mot d'instruction 83.

Par exemple, si le mot d'instruction requis est situé à la position n de l'emplacement mémoire, alors les mots 81 du n^{ième} au dernier mot 81 de la ligne seront extraits, puis les mots du premier de la ligne au mot n-1 seront extraits, selon le fonctionnement d'une transaction circulaire (« Wrap »).

Ensuite, à l'étape 16 les moyens de contrôle 4 reconstituent par concaténation le code d'authentification message MAC_{ref} à partir des fractions réparties dans les zones libre 82 de chacun des mots mémoires 81 reçus de l'emplacement mémoire 8.

Cette concaténation est possible quel que soit l'ordre d'extraction des mots d'instruction.

Les moyens de contrôle 4 calculent (étape 17) également un code d'authentification message MAC_{calc} à partir du contenu des mots d'instruction reçus 83 lors du transfert, puis comparent code calculé MAC_{calc} avec le code d'authentification reconstitué MAC_{ref}.

Si les deux codes ne sont pas identiques (étape 18), cela signifie que le code programme à été modifié. Les moyens de contrôle génèrent alors une erreur.

Si les deux codes sont identiques (étape 19), alors cela signifie que l'intégrité et l'authenticité du code programme est vérifiée, et le code programme peut être exécuté de manière sécurisé par le microcontrôleur 5.

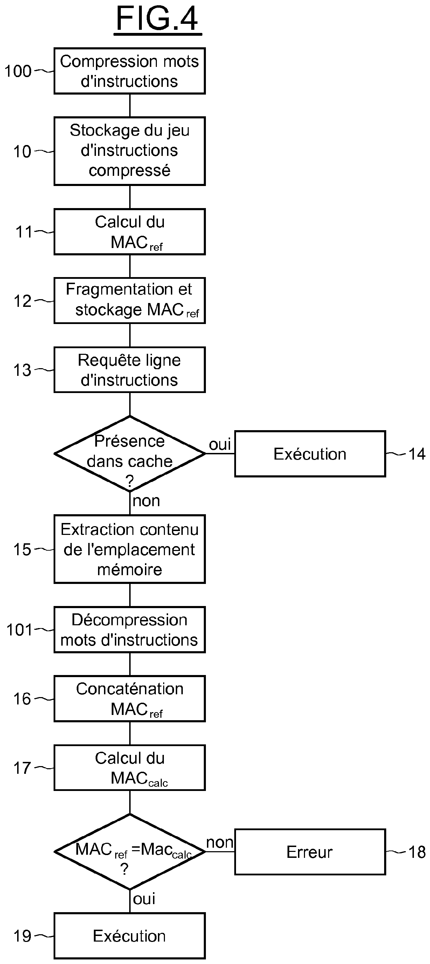

La figure 4 illustre un autre mode de réalisation, analogue au procédé décrit précédemment et illustré par la figure 2, mais comprenant en outre deux étapes 100 et 101 supplémentaires

Dans ce mode de réalisation, les emplacements mémoire 8 comprennent des mots mémoires 81 de tailles identiques à la taille des mots d'instruction 83, par exemple ici des emplacements mémoire comportant trente-deux mots de 16 bits.

La première étape 100 correspond à une compression des mots d'instruction 83 préalablement à l'étape 10 de stockage dans les emplacements mémoire de la mémoire externe.

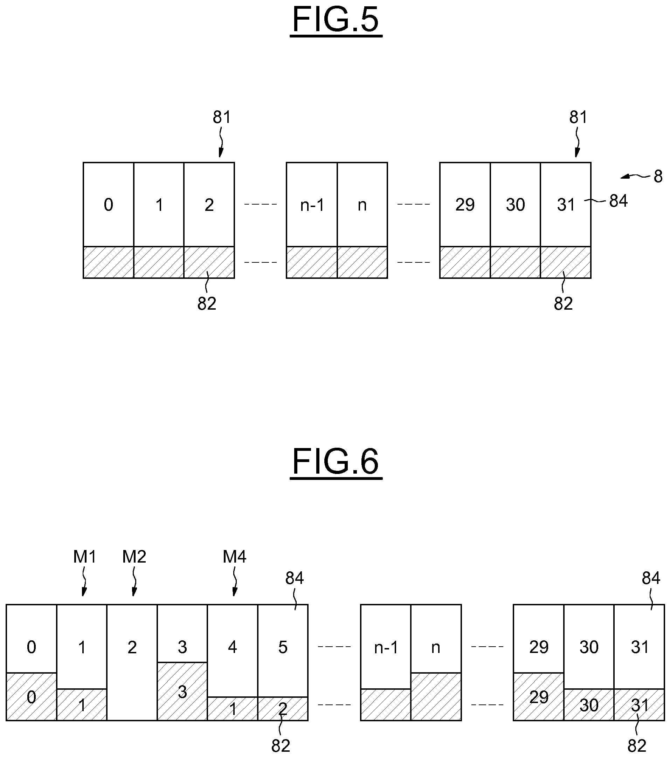

Cette compression peut se faire
- selon un algorithme déterministe permettant d'obtenir des mots d'instruction compressés 84 de taille fixe (figure 5), auquel cas les mots sont stockés dans les mots mémoires 81 et les zones libres 82 sont de tailles fixe également. Par exemple, les mots compressés 84 font 15 bits et il reste donc 1 bits par mot pour stocker les fractions de code d'authentification, ou
- selon un algorithme à codage variable permettant d'obtenir des mots d'instruction compressés 84 de tailles variables (figure 6), auquel cas les mots compressés 84 sont stockés dans les mots mémoires 81 et les zones libres 82 sont de tailles variable, certains mots 81 pouvant ne pas comprendre de zones libres si le mot correspondant 83 n'est pas compressible. Par exemple, le premier mot mémoire M1 comprend un mot compressé de 15 bits, et une fraction de code d'authentification de 1 bit, alors que le quatrième mot mémoire M4 comprend un mot d'instruction compressé de 13 bits et une fraction de code d'authentification de 3 bits. Le troisième mot mémoire M3 ne comporte quant à lui pas de mot d'instruction compressé.
Seuls les bits correspondants aux mots d'instructions sont compressés, et ceux correspondant au code d'authentification ne le sont pas.

L'étape 101 qui suit l'extraction du contenu de l'emplacement mémoire 8 correspond à une décompression des mots d'instruction compressés 84.

Par exemple ici, les moyens de contrôle 4 peuvent comprendre un décompresseur matériel, qui permet une décompression rapide des données.

Il convient de noter que les modes de mise en oeuvre et de réalisation présentés ici ne sont nullement limitatifs. Notamment, bien qu'il ait été question ici de mémoire flash NOR, l'invention peut également s'appliquer aux mémoires DRAM (« Dynamic Random Access Memory »).

De plus, bien que l'on ait décrit ci-avant une mémoire cache 6 située dans le module de traitement informatique 1, la mémoire cache pourrait être située à l'extérieur du module de traitement. En particulier, la mémoire cache pourrait être formée par une mémoire tampon (« buffer ») située dans l'interface de la mémoire FLASH 8.

Par ailleurs alors qu'il il a été décrit précédemment une exécution du code programme par le microprocesseur 5 uniquement si le code d'authentification reconstitué MAC_{ref} est identique au code d'authentification calculé MAC_{calc}, il est tout à fait possible que l'exécution du code programme débute pendant le calcul du code MAC_{calc} et la comparaison des deux codes MAC_{ref} et MAC_{calc}, et soit interrompue dans le cas où la comparaison indique que les deux codes MAC_{ref} et MAC_{calc} ne sont pas identiques.

## Revendications

1. Procédé de sécurisation d'un code programme destiné à être exécuté par une unité centrale (5) d'un module de traitement informatique (1)couplée à une mémoire cache (6) contenant des lignes de cache (60) possédant chacune un champ de données destiné à stocker des mots d'instruction (83) exécutables par l'unité centrale (5), le procédé comprenant un stockage du code programme dans des emplacements mémoire (81) d'une mémoire externe (2) au module de traitement informatique (1), chaque emplacement mémoire (8) étant capable de stocker les mots d'instructions (81) d'une ligne de cache, une détermination de codes d'authentification respectivement associés auxdites lignes de cache, le procédé étant **caractérisé en ce qu'**il comprend pour chaque ligne de cache une fragmentation du code d'authentification associé et un stockage de ce code d'authentification fragmenté réparti dans l'emplacement mémoire (8) correspondant.

2. Procédé selon la revendication 1, dans lequel chaque emplacement mémoire (8) contient des mots mémoires (81) destinés à stocker respectivement les mots (83) de la ligne de cache correspondante, chaque mot mémoire (81) a une capacité de stockage supérieure à celle du mot d'instruction (83) et contient une zone non utilisée (82) pour le stockage du mot d'instruction, et les fragments du code d'authentification associés aux mots d'instructions (83) de la ligne de cache sont stockés dans certaines au moins desdites zones non utilisées.

3. Procédé selon la revendication 2, comprenant en outre
- lors d'une requête d'un mot d'instruction (83) par l'unité centrale (5) non présent dans une ligne de cache (60) de la mémoire cache (6),
- une extraction de la mémoire externe (2) des mots d'instructions (83) de la ligne de cache correspondante et du code d'authentification fragmenté associé,
- une reconstitution du code d'authentification à partir desdits fragments (82)
- un calcul du code d'authentification à partir des mots d'instructions (83) extraits, et
- une comparaison du code d'authentification calculé MAC_{calc} avec le code d'authentification reconstitué MAC_{ref}.

4. Procédé selon la revendication 1, dans lequel chaque emplacement mémoire (8) contient des mots mémoires (81) destinés à stocker respectivement les mots (83) de la ligne de cache correspondante, chaque mot mémoire (81) a une capacité de stockage égale à celle du mot d'instruction (83), et le stockage du code programme comprend une compression de certains au moins des mots d'instructions (83) de chaque ligne de cache (8) et un stockage des mots d'instructions compressés (84) dans les mots mémoires (81) correspondants, ce stockage laissant subsister une zone libre (82) dans le mot mémoire (81) correspondant, et les fragments du code d'authentification associé aux mots d'instructions compressés (84) de la ligne de cache sont stockés dans lesdites zones libres.

5. Procédé selon la revendication 4, dans lequel la compression se fait selon un algorithme à codage déterministe les zones libres étant de tailles égales.

6. Procédé selon la revendication 4, dans lequel la compression se fait selon un algorithme à codage variable les zones libres étant de tailles variables.

7. Procédé selon l'une des revendications 4 à 6, comprenant en outre lors d'une requête d'un mot d'instruction (83) par l'unité centrale non présent dans une ligne de cache (60) de la mémoire cache (6),
- une extraction de la mémoire externe (2) des mots d'instructions compressé (84) de la ligne de cache (60) correspondante et du code d'authentification fragmenté associé,
- une reconstitution du code d'authentification à partir desdits fragments,
- une décompression des mots d'instructions compressés (84),
- un calcul du code d'authentification à partir des mots d'instruction décompressés (84), et
- une comparaison du code d'authentification calculé MAC_{calc} avec le code d'authentification extrait MAC_{ref}.

8. Système SYS comprenant :
- un module de traitement informatique (1) contenant une unité centrale (5),
- une mémoire cache (6) contenant des lignes de cache (60) possédant chacune un champ de données destiné à stocker des mots d'instruction (83) exécutables par l'unité centrale (5) du module de traitement informatique (1),
- une mémoire externe (2) au module de traitement informatique (1) comprenant des emplacements mémoire (8) correspondant à des champs de données de lignes de cache, chaque emplacement mémoire étant configuré pour stocker les mots d'instructions (83) d'une ligne de cache ,
- des moyens de contrôle (4) configurés pour déterminer des codes d'authentification respectivement associés auxdites lignes de cache,
le système étant **caractérisé en ce que** les moyens de contrôle sont en outre configurés pour fragmenter le code d'authentification associé et stocker ce code d'authentification fragmenté réparti dans l'emplacement mémoire (8) correspondant,

9. Système selon la revendication 8, dans lequel chaque mot mémoire (81) de chaque emplacement mémoire (8) a une capacité de stockage supérieure à celle du mot d'instruction (83) et contient une zone non utilisée pour le stockage du mot d'instruction (83), et certaines au moins desdites zones non utilisées sont aptes à recevoir les fragments du code d'authentification associé aux mots d'instructions (83) de la ligne de cache.

10. Système selon la revendication 8 ou 9, dans lequel les moyens de contrôle (4) sont configurés pour, lors d'une requête d'un mot d'instruction (84) par l'unité centrale non présent dans une ligne de cache de la mémoire cache,
- extraire de la mémoire externe les mots d'instructions (83) de la ligne de cache (60) correspondante et le code d'authentification fragmenté associé,
- reconstruire le code d'authentification à partir desdits fragments,
- calculer le code d'authentification à partir des mots d'instructions extraits (83), et
- comparer le code d'authentification calculé MAC_{calc} avec le code d'authentification reconstitué MAC_{ref}.

11. Système selon la revendication 8, dans lequel chaque emplacement mémoire (8) contient des mots mémoires (81) destinés à stocker respectivement les mots (83) de la ligne de cache correspondante, chaque mot mémoire (81) a une capacité de stockage égale à celle du mot d'instruction (83), et est apte à recevoir des mots d'instruction compressés (84) ou non de manière à laisser subsister ou non une zone libre dans le mot mémoire apte à recevoir un fragment du code d'authentification associé aux mots d'instructions de la ligne de cache.

12. Système selon la revendication 11, dans lequel les moyens de contrôle (4) sont configurés pour compresser les mots d'instruction (83) en mots compressés (84) de tailles égales.

13. Système selon la revendication 11, dans lequel les moyens de contrôle sont configurés pour compresser les mots d'instruction (83) en mots compressés (84) de tailles variables.

## Patentansprüche

1. Verfahren zur Absicherung eines Programmcodes, der dazu bestimmt ist, von einer Zentraleinheit (5) eines Datenverarbeitungsmoduls (1) ausgeführt zu werden, die mit einem Cache-Speicher (6) gekoppelt ist, der Cache-Zeilen (60) enthält, die jeweils ein Datenfeld aufweisen, das dazu bestimmt ist, Anweisungswörter (83) zu speichern, die von der Zentraleinheit (5) ausführbar sind,
das Verfahren umfassend eine Speicherung des Programmcodes an Speicherstellen (81) eines Speichers (2), der außerhalb des Datenverarbeitungsmoduls (1) gelegen ist, wobei jede Speicherstelle (8) dazu in der Lage ist, die Anweisungswörter (81) einer Cache-Zeile, eine Ermittlung von Authentifizierungscodes, die jeweils mit den Cache-Zeilen verknüpft sind, zu speichern, wobei das Verfahren **dadurch gekennzeichnet ist, dass** es für jede Cache-Zeile eine Fragmentierung des verknüpften Authentifizierungscodes und eine Speicherung dieses verteilten fragmentierten Authentifizierungscodes an der entsprechenden Speicherstelle (8) umfasst.

2. Verfahren nach Anspruch 1, wobei jede Speicherstelle (8) Speicherwörter (81) enthält, die dazu bestimmt sind, jeweils die Wörter (83) der entsprechenden Cache-Zeile zu speichern, jedes Speicherwort (81) eine Speicherkapazität aufweist, die größer als die des Anweisungsworts (83) ist und einen ungenutzten Bereich (82) für die Speicherung des Anweisungsworts enthält, und die Fragmente des Authentifizierungscodes, die mit den Anweisungswörtern (83) der Cache-Zeile verknüpft sind, in mindestens einigen der ungenutzten Bereiche gespeichert sind.

3. Verfahren nach Anspruch 2, ferner umfassend
- bei einer Anforderung eines Anweisungsworts (83) durch die Zentraleinheit (5), das nicht in einer Cache-Zeile (60) des Cache-Speichers (6) vorhanden ist,
- eine Extraktion, aus dem außerhalb gelegenen Speicher (2), der Anweisungswörter (83) der entsprechenden Cache-Zeile und des verknüpften fragmentierten Authentifizierungscodes,
- eine Wiederherstellung des Authentifizierungscodes anhand der Fragmente (82)
- eine Berechnung des Authentifizierungscodes anhand der extrahierten Anweisungswörter (83), und
- einen Vergleich des berechneten Authentifizierungscodes (MAC_{calc}) mit dem wiederhergestellten Authentifizierungscode (MAC_{ref}).

4. Verfahren nach Anspruch 1, wobei jede Speicherstelle (8) Speicherwörter (81) enthält, die dazu bestimmt sind, jeweils die Wörter (83) der entsprechenden Cache-Zeile zu speichern, jedes Speicherwort (81) eine Speicherkapazität aufweist, die gleich der des Anweisungsworts (83) ist, und die Speicherung des Programmcodes eine Komprimierung mindestens einiger der Anweisungswörter (83) jeder Cache-Zeile (8) und eine Speicherung der komprimierten Anweisungswörter (84) in den entsprechenden Speicherwörtern (81) umfasst, wobei diese Speicherung einen freien Bereich (82) in dem entsprechenden Speicherwort (81) bestehen lässt, und die Fragmente des Authentifizierungscodes, der mit den komprimierten Anweisungswörtern (84) der Cache-Zeile verknüpft ist, in den freien Bereichen gespeichert sind.

5. Verfahren nach Anspruch 4, wobei die Komprimierung gemäß einem deterministischen Codierungsalgorithmus erfolgt, wobei die freien Bereiche gleiche Größen aufweisen.

6. Verfahren nach Anspruch 4, wobei die Komprimierung gemäß einem variablen Codierungsalgorithmus erfolgt, wobei die freien Bereiche variable Größen aufweisen.

7. Verfahren nach einem der Ansprüche 4 bis 6, ferner umfassend, bei einer Anforderung eines Anweisungsworts (83) durch die Zentraleinheit, das nicht in einer Cache-Zeile (60) des Cache-Speichers (6) vorhanden ist,
- eine Extraktion, aus dem außerhalb gelegenen Speicher (2), der komprimierten Anweisungswörter (84) der entsprechenden Cache-Zeile (60) und des verknüpften fragmentierten Authentifizierungscodes,
- eine Wiederherstellung des Authentifizierungscodes anhand der Fragmente,
- eine Dekomprimierung der komprimierten Anweisungswörter (84),
- eine Berechnung des Authentifizierungscodes anhand der dekomprimierten Anweisungswörter (84), und
- einen Vergleich des berechneten Authentifizierungscodes (MAC_{calc}) mit dem extrahierten Authentifizierungscode (MAC_{ref}).

8. System (SYS), umfassend:
- ein Datenverarbeitungsmodul (1), das eine Zentraleinheit (5) enthält,
- einen Cache-Speicher (6), der Cache-Zeilen (60) enthält, die jeweils ein Datenfeld aufweisen, das dazu bestimmt ist, Anweisungswörter (83) zu speichern, die von der Zentraleinheit (5) des Datenverarbeitungsmoduls (1) ausführbar sind,
- einen Speicher (2), der außerhalb des Datenverarbeitungsmoduls (1) gelegen ist, der Speicherstellen (8) umfasst, die Datenfeldern von Cache-Zeilen entsprechen, wobei jede Speicherstelle konfiguriert ist, die Anweisungswörter (83) einer Cache-Zeile zu speichern,
- Steuerungsmittel (4), die konfiguriert sind, Authentifizierungscodes zu ermitteln, die jeweils mit den Cache-Zeilen verknüpft sind,
wobei das System **dadurch gekennzeichnet ist, dass** die Steuerungsmittel ferner konfiguriert sind, den verknüpften Authentifizierungscode zu fragmentieren und diesen verteilten fragmentierten Authentifizierungscode an der entsprechenden Speicherstelle (8) zu speichern,

9. System nach Anspruch 8, wobei jedes Speicherwort (81) jeder Speicherstelle (8) eine Speicherkapazität aufweist, die größer als die des Anweisungsworts (83) ist und einen ungenutzten Bereich für die Speicherung des Anweisungsworts (83) enthält, und mindestens einige der ungenutzten Bereiche geeignet sind, die Fragmente des Authentifizierungscodes, der mit den Anweisungswörtern (83) der Cache-Zeile verknüpft ist, aufzunehmen.

10. System nach einem der Ansprüche 8 oder 9, wobei die Steuerungsmittel (4) konfiguriert sind, bei einer Anforderung eines Anweisungsworts (84) durch die Zentraleinheit, das nicht in einer Cache-Zeile des Cache-Speichers vorhanden ist,
- aus dem außerhalb gelegenen Speicher die Anweisungswörter (83) der entsprechenden Cache-Zeile (60) und den verknüpften fragmentierten Authentifizierungscode zu extrahieren,
- den Authentifizierungscode anhand der Fragmente wiederherzustellen,
- den Authentifizierungscode anhand der extrahierten Anweisungswörter (83) zu berechnen, und
- den berechneten Authentifizierungscode (MAC_{calc}) mit dem wiederhergestellten Authentifizierungscode (MAC_{ref}) zu vergleichen.

11. System nach Anspruch 8, wobei jede Speicherstelle (8) Speicherwörter (81) enthält, die dazu bestimmt sind, jeweils die Wörter (83) der entsprechenden Cache-Zeile zu speichern, jedes Speicherwort (81) eine Speicherkapazität aufweist, die gleich der des Anweisungsworts (83) ist, und geeignet ist, komprimierte Anweisungswörter (84) aufzunehmen oder nicht, um einen freien Bereich in dem Speicherwort bestehen zu lassen oder nicht, der geeignet ist, ein Fragment des Authentifizierungscodes aufzunehmen, der mit den komprimierten Anweisungswörtern der Cache-Zeile verknüpft ist.

12. System nach Anspruch 11, wobei die Steuerungsmittel (4) konfiguriert sind, die Anweisungswörter (83) zu komprimierten Wörtern (84) gleicher Größen zu komprimieren.

13. System nach Anspruch 11, wobei die Steuerungsmittel konfiguriert sind, die Anweisungswörter (83) zu komprimierten Wörtern (84) variabler Größen zu komprimieren.

## Claims

1. Method for protecting a program code that is intended to be executed by a central processing unit (5) of a computer processing module (1), which central processing unit is coupled to a cache memory (6) containing cache lines (60) that each have a data field that is intended to store instruction words (83) that can be executed by the central processing unit (5), the method comprising storage of the program code in memory locations (81) of an external memory (2) with respect to the computer processing module (1), each memory location (8) being capable of storing the instruction words (81) of one cache line, determination of authentication codes that are respectively associated with said cache lines, the method being **characterized in that** it comprises for each cache line, fragmentation of the associated authentication code and storage of this distributed fragmented authentication code in the corresponding memory location (8).

2. Method according to Claim 1, in which each memory location (8) contains memory words (81) that are intended to respectively store the words (83) of the corresponding cache line, each memory word (81) has a storage capacity above that of the instruction word (83) and contains an area (82) that is not used for storing the instruction word, and the fragments of the authentication code that is associated with the instruction words (83) of the cache line are stored in at least some of said unused areas.

3. Method according to Claim 2, moreover comprising
- during a request by the central processing unit (5) for an instruction word (83) that is not present in a cache line (60) of the cache memory (6),
- extraction, from the external memory (2), of the instruction words (83) of the corresponding cache line and of the associated fragmented authentication code,
- reconstruction of the authentication code from said fragments (82),
- computation of the authentication code from the extracted instruction words (83), and
- comparison of the computed authentication code (MAC_{calc}) with the reconstructed authentication code (MAC_{ref}).

4. Method according to Claim 1, in which each memory location (8) contains memory words (81) that are intended to respectively store the words (83) of the corresponding cache line, each memory word (81) has a storage capacity equal to that of the instruction word (83), and the storage of the program code comprises compression of at least some of the instruction words (83) of each cache line (8) and storage of the compressed instruction words (84) in the corresponding memory words (81), this storage allowing a free area (82) to remain in the corresponding memory word (81), and the fragments of the authentication code that is associated with the compressed instruction words (84) of the cache line are stored in said free areas.

5. Method according to Claim 4, in which the compression is performed in accordance with a deterministic coding algorithm, the free areas being of equal size.

6. Method according to Claim 4, in which the compression is performed in accordance with a variable coding algorithm, the free areas being of variable size.

7. Method according to one of Claims 4 to 6, moreover comprising, during a request by the central processing unit for an instruction word (83) that is not present in a cache line (60) of the cache memory (6),
- extraction, from the external memory (2), of the compressed instruction words (84) of the corresponding cache line (60) and of the associated fragmented authentication code,
- reconstruction of the authentication code from said fragments,
- decompression of the compressed instruction words (84),
- computation of the authentication code from the decompressed instruction words (84), and
- comparison of the computed authentication code (MAC_{calc}) with the extracted authentication code (MAC_{ref}).

8. System (SYS) comprising:
- a computer processing module (1) containing a central processing unit (5),
- a cache memory (6) containing cache lines (60) that each have a data field that is intended to store instruction words (83) that can be executed by the central processing unit (5) of the computer processing module (1),
- an external memory (2) with respect to the computer processing module (1) comprising memory locations (8) corresponding to data fields of cache lines, each memory location being configured to store the instruction words (83) of a cache line,
- control means (4) that are configured to determine authentication codes that are respectively associated with said cache lines, the system being **characterized in that** the control means are further configured to fragment the associated authentication code and to store this distributed fragmented authentication code in the corresponding memory location (8).

9. System according to Claim 8, in which each memory word (81) of each memory location (8) has a storage capacity above that of the instruction word (83) and contains an area that is not used for storing the instruction word (83), and at least some of said unused areas are capable of receiving the fragments of the authentication code that is associated with the instruction words (83) of the cache line.

10. System according to Claim 8 or 9, in which the control means (4) are configured to, during a request by the central processing unit for an instruction word (84) that is not present in a cache line of the cache memory,
- extract, from the external memory, the instruction words (83) of the corresponding cache line (60) and the associated fragmented authentication code,
- reconstruct the authentication code from said fragments,
- compute the authentication code from the extracted instruction words (83), and
- compare the computed authentication code (MAC_{calc}) with the reconstructed authentication code (MAC_{ref}).

11. System according to Claim 8, in which each memory location (8) contains memory words (81) that are intended to respectively store the words (83) of the corresponding cache line, each memory word (81) has a storage capacity equal to that of the instruction word (83), and is capable of receiving compressed, or otherwise, instruction words (84) so as to allow a free area to remain in the memory word that is capable of receiving a fragment of the authentication code that is associated with the instruction words of the cache line.

12. System according to Claim 11, in which the control means (4) are configured to compress the instruction words (83) to form compressed words (84) of equal size.

13. System according to Claim 11, in which the control means are configured to compress the instruction words (83) to form compressed words (84) of variable size.
